# EUROPEAN PATENT APPLICATION

(11) **EP 3 859 276 A1**
(43) Date of publication of application: **04.08.2021**
(21) Application number: 21154163.6
(22) Date of filing: 29.01.2021
(51) Int. Cl.: G01C 21/20, G01C 21/16

(54) **POSITIONING APPARATUS, RECORDING MEDIUM, AND POSITIONING METHOD**

(30) Priority: 03.02.2020 JP 2020016149
(71) Applicant: SCREEN Holdings Co., Ltd., Kyoto 602-8585 (JP)
(72) Inventor: NAGATA, Hikaru, Kyoto-shi, Kyoto 602-8585 (JP)
(74) Representative: Goddar, Heinz J.

(57) **Abstract**

A positioning apparatus according to the present invention includes: a detector configured to detect that a movable object has moved from a first position to a second position; a data acquisition unit configured to acquire first position data, second position data, and virtual moving direction data indicating a moving direction of the movable object having moved from the first position to the second position in a virtual space; and a correction unit configured to correct the virtual moving direction data so that the moving direction of the movable object in the virtual space follows a first direction connecting the first position and the second position by using the first position data and the second position data. Therefore, deterioration of positioning accuracy of the movable object in the virtual space can be prevented.

## Description

### BACKGROUND OF THE INVENTION

### Field of the Invention

Technology disclosed in the specification of the present application relates to a positioning apparatus, a positioning program, and a positioning method.

### Description of the Background Art

In indoor rooms or the like where it is difficult to receive radio waves of the global positioning system (GPS), a technology of acquiring information, such as the current position of a movable object, by using a method using a beacon (registered trademark), WiFi (registered trademark), terrestrial magnetism, or the like has hitherto been used.

In recent years, the following technology has also been used: by combining measurement data obtained from a camera, an acceleration sensor, an angular velocity sensor, or the like mounted in a smartphone or the like, information such as the current position of the movable object in a virtual space is caused to be reflected in information corresponding to the movable object in a real space (see, for example, Japanese Unexamined Patent Application Publication (Translation of PCT Application) No. 2014-522482). Here, the real space refers to an actually existing space. Further, the virtual space refers to a virtual space, though not existing as an actual space, that can be displayed and operated on an operation screen of a mobile terminal or the like.

Positioning of the movable object in the virtual space is continuously performed based on measurement data obtained from a camera, an acceleration sensor, an angular velocity sensor, or the like. Thus, as the movement amount of the movable object increases, errors accumulate in such continuously calculated positioning data, which causes deterioration of positioning accuracy of the movable object. In addition, when there is disturbance such as vibration that occurs along with movement of the movable object, the errors accumulating in the positioning data also increase.

### SUMMARY OF THE INVENTION

The present invention is intended for a positioning apparatus, a recording medium, and a positioning method.

One aspect of the present invention is a positioning apparatus. The positioning apparatus includes: a detector configured to detect that a movable object has moved from a first position to a second position; a data acquisition unit configured to acquire at least first position data being data indicating the first position, second position data being data indicating the second position, and virtual moving direction data being data indicating a moving direction of the movable object having moved from the first position to the second position in a virtual space; and a correction unit configured to correct the virtual moving direction data so that the moving direction of the movable object in the virtual space follows a first direction being a direction connecting the first position and the second position by using the first position data and the second position data.

Deterioration of positioning accuracy of the movable object in the virtual space can be prevented. In particular, by correcting the moving direction of the movable object in the virtual space, positioning accuracy of the movable object in the virtual space can be effectively enhanced.

One aspect of the present invention is a recording medium storing positioning program. When being installed and executed by a computer, the positioning program is configured to implement: causing the computer to detect that a movable object has moved from a first position to a second position; causing the computer to acquire at least first position data being data indicating the first position, second position data being data indicating the second position, and virtual moving direction data being data indicating a moving direction of the movable object having moved from the first position to the second position in a virtual space; and causing the computer to correct the virtual moving direction data so that the moving direction of the movable object in the virtual space follows a first direction being a direction connecting the first position and the second position by using the first position data and the second position data.

Deterioration of positioning accuracy of the movable object in the virtual space can be prevented. In particular, by correcting the moving direction of the movable object in the virtual space, positioning accuracy of the movable object in the virtual space can be effectively enhanced.

One aspect of the present invention is a positioning method. The positioning method includes: detecting that a movable object has moved from a first position to a second position; acquiring at least first position data being data indicating the first position, second position data being data indicating the second position, and virtual moving direction data being data indicating a moving direction of the movable object having moved from the first position to the second position in a virtual space; and correcting the virtual moving direction data so that the moving direction of the movable object in the virtual space follows a first direction being a direction connecting the first position and the second position by using the first position data and the second position data.

Deterioration of positioning accuracy of the movable object in the virtual space can be prevented. In particular, by correcting the moving direction of the movable object in the virtual space, positioning accuracy of the movable object in the virtual space can be effectively enhanced.

Therefore, the object of the present invention is to prevent deterioration of positioning accuracy of a movable object in a virtual space.

These and other objects, features, aspects and advantages of the present disclosure will become more apparent from the following detailed description of the present disclosure when taken in conjunction with the accompanying drawings.

### BRIEF DESCRIPTION OF THE DRAWINGS

FIG. 1 is a diagram illustrating an example of a hardware configuration of a positioning apparatus according to an embodiment.
FIG. 2 is a diagram illustrating an example of a functional configuration of the positioning apparatus according to the embodiment.
FIG. 3 is a flowchart illustrating an example of positioning operation.
FIG. 4 is a plan view conceptually illustrating a state of movement of a movable object in a virtual space.
FIG. 5 is a plan view conceptually illustrating a state of movement of a movable object in a virtual space when it is detected that the movable object has moved from a position P₁ to a position P₂ in a real space.
FIG. 6 is a diagram for describing a method of correcting virtual moving direction data.
FIG. 7 is a plan view conceptually illustrating a state of movement of a movable object in a virtual space.
FIG. 8 is a plan view conceptually illustrating a state of movement of a movable object in a virtual space.
FIG. 9 is a plan view conceptually illustrating a state of movement of a movable object in a virtual space when it is detected that the movable object has moved from a position P₂ to a position P₃ in a real space.
FIG. 10 is a plan view conceptually illustrating a state of movement of a movable object in a virtual space.

### DESCRIPTION OF THE PREFERRED EMBODIMENTS

An embodiment will be described below with reference to the attached drawings. The following embodiment will also describe detailed features and the like for the sake of description of technology, but those are merely an example, and all of those are not necessarily essential features to carry out the embodiment.

Note that the drawings are schematically illustrated, and for the sake of convenience of description, the configurations are omitted or the configurations are simplified in the drawings as appropriate. Further, the interrelationship of the size and the position between the configurations and the like illustrated in each of different drawings is not necessarily illustrated accurately, and may be changed as appropriate. Further, in the drawings such as plan views as well as cross-sectional views, hatching may be provided for the sake of easy understanding of the details of the embodiment.

Further, in the description illustrated below, similar components are denoted by the same reference signs in illustration, and are also given similar terms and functions. Thus, detailed description thereof may be omitted in order to avoid redundancy.

Further, in the following description, when the expressions such as "provide", "include", and "have" are used to describe a certain component, unless otherwise specifically noted, the expressions are not construed as exclusive expression that may exclude the presence of other components.

Further, in the following description, also when the ordinal numbers such as "first" and "second " are used as well, these terms are used for the sake of convenience of easy understanding of the details of the embodiment, and the order and the like that may be defined by these ordinal numbers are not restrictive.

Further, in the following description, the expressions indicating an equal condition such as "same", "equal", "uniform", and "homogeneous" include, unless otherwise specifically noted, a case of the exact equal condition and a case in which there is a tolerance or a difference within the range in which similar functions are obtained.

Further, the expression in the following description such as "to move a target object in a specific direction" includes, unless otherwise specifically noted, a case in which a target object is moved in parallel with the specific direction and a case in which a target object is moved in a direction that includes a component of the specific direction.

### <Embodiment>

A positioning apparatus, a positioning program, and a positioning method according to the present embodiment will be described below.

### <Configuration of Positioning Apparatus>

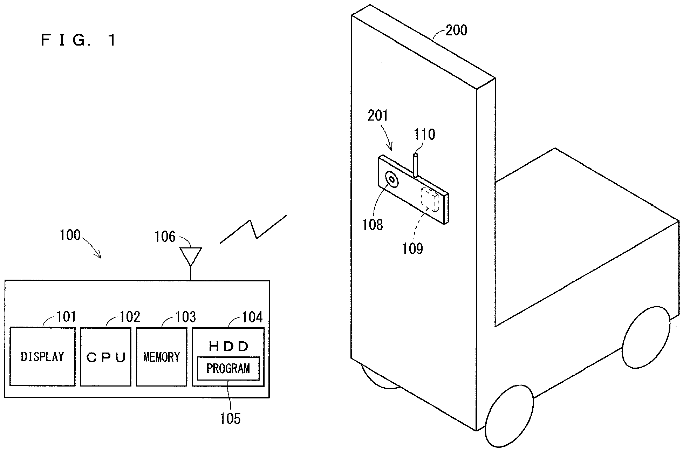

FIG. 1 is a diagram illustrating an example of a hardware configuration of a positioning apparatus 100 according to the present embodiment.

As illustrated in FIG. 1, the positioning apparatus 100 is at least a computer in which a program 105 that is used for positioning operation related to a movable object 200 is installed, and includes a central processing unit (specifically, CPU) 102, a memory 103, a hard disk drive (specifically, HDD) 104, and a display 101. Further, the positioning apparatus 100 includes a communication unit 106 for performing wireless communication or wired communication with the movable object 200.

Here, the positioning operation related to the movable object 200 includes at least one of operation of measuring the current position of the movable object 200, operation of measuring a specific position in a moving path of the movable object 200, or operation of measuring a moving direction of the movable object 200.

As the movable object 200, for example, a powered vehicle such as a forklift is assumed. An attachment device 201 is removably attached to the movable object 200. The attachment device 201 is, for example, a mobile terminal such as a smartphone, and at least includes a communication unit 110 for performing wireless communication or wired communication with the communication unit 106 of the positioning apparatus 100. Further, the attachment device 201 may include a camera 108 and a sensor unit 109. Note that, in the present embodiment, the communication unit 110, the camera 108, and the sensor unit 109 are integrally configured in the attachment device 201, but each of the configurations may be separately attached to the movable object 200.

The camera 108 is attached to the front side in the moving direction of the movable object 200, for example, and can capture images along the moving path of the movable object 200. The camera 108 includes, for example, a CCD being one of a solid imaging element, and optical systems such as an electronic shutter and lenses. The camera 108 may be, for example, a camera incorporated into the mobile terminal such as a smartphone. The camera 108 can transmit image data obtained during image capturing to the positioning apparatus 100 via the communication unit 110.

The sensor unit 109 includes, for example, at least one sensor out of an acceleration sensor that can measure acceleration of the movable object 200, an angular velocity sensor that can measure a rotation angle of the movable object 200, and the like. The sensor unit 109 can transmit measurement data measured by the sensor to the positioning apparatus 100 via the communication unit 110.

In the positioning apparatus 100, a corresponding program 105 is installed in the HDD 104. The installation of the program 105 may be performed by writing into the HDD 104 data that is read from an external storage medium such as a compact disc (specifically, CD), a digital versatile disc (specifically, DVD), and a universal serial bus (specifically, USB) memory, or may be performed by writing into the HDD 104 data that is received via a network.

Further, the HDD 104 may be replaced with an auxiliary storage apparatus of another type. For example, the HDD 104 may be replaced with a solid state drive (specifically, SSD), a random access memory (specifically, RAM) disk, or the like.

In the positioning apparatus 100, the program 105 installed in the HDD 104 is loaded into the memory 103, and the loaded program 105 is executed by the CPU 102. In this manner, the computer executes the program 105 and thereby functions as the positioning apparatus 100.

Note that at least a part of the processing performed by the CPU 102 may be performed by a processor other than the CPU 102. For example, at least a part of the processing performed by the CPU 102 may be performed by a graphics processing unit (GPU) or the like. Further, at least a part of the processing performed by the CPU 102 may be performed by hardware that does not execute the program.

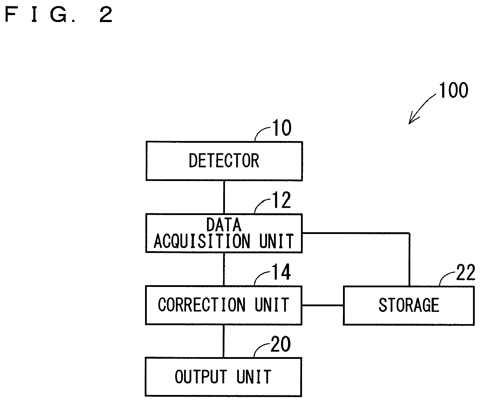

FIG. 2 is a diagram illustrating an example of a functional configuration of the positioning apparatus 100 according to the present embodiment. As illustrated in FIG. 2, the positioning apparatus 100 at least includes a detector 10, a data acquisition unit 12, and a correction unit 14. Further, the positioning apparatus 100 may include an output unit 20 that outputs detection results, acquired data, and correction results as necessary, and a storage 22. The output unit 20 is implemented by the display 101 of FIG. 1 or the like. Further, the storage 22 is, for example, implemented by at least one of the memory 103 or the HDD 104 of FIG. 1. Further, the detector 10, the data acquisition unit 12, and the correction unit 14 are, for example, implemented by causing the CPU 102 of FIG. 1 to execute the program 105.

The detector 10 at least detects movement of the movable object 200, based on data that is obtained by the camera 108, the sensor unit 109, or the like in the attachment device 201.

The data acquisition unit 12 at least acquires position data of a specific position in the moving path of the movable object 200 and virtual moving direction data being data indicating the moving direction of the movable object 200 in a virtual space.

The correction unit 14 corrects the virtual moving direction data of the movable object 200. Further, the correction unit 14 can also correct virtual movable object position data indicating the position of the movable object 200 in a virtual space.

The storage 22 stores position data indicating a specific position in the moving path of the movable object 200 in advance, through input from a user or the like. The position data includes, for example, position data (X₁, Y₁) indicating a position P₁ at which the movable object 200 starts movement, position data (X₂, Y₂) indicating a position P₂ of a corner at which the moving direction of the movable object 200 is changed, position data (X₃, Y₃) indicating a position P₃ of a corner located ahead of the position P₂ in the moving path of the movable object 200, and the like. Note that the position data indicating these specific positions has the same values in the virtual space and the real space. Further, in the present embodiment, the position data is shown in a two-dimensional space, but position data in a three-dimensional space may be used.

### <Operation of Positioning Apparatus>

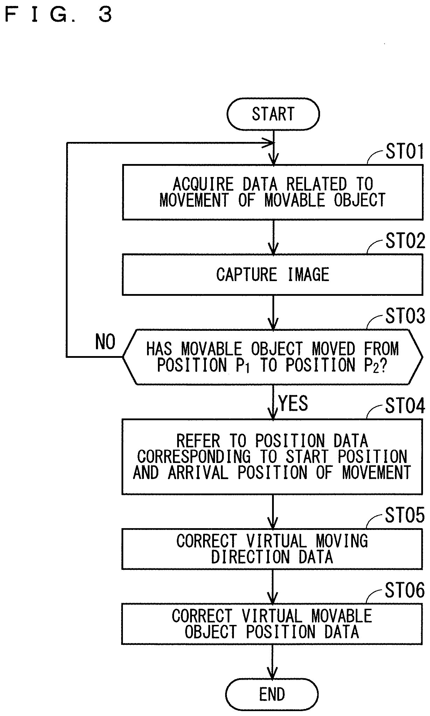

Next, the operation of the positioning apparatus 100, specifically, the positioning operation related to the movable object 200, will be described with reference to FIG. 3 to FIG. 10. Note that FIG. 3 is a flowchart illustrating an example of the positioning operation. The following will describe the positioning operation related to the movable object 200 that moves in the order of the position P₁, the position P₂, and the position P₃ in a real space.

First, the data acquisition unit 12 of the positioning apparatus 100 acquires data related to movement of the movable object 200 in a virtual space via the communication unit 110 of the movable object 200 (Step ST01 of FIG. 3). The data related to movement of the movable object 200 in a virtual space at least includes the virtual moving direction data, but may further include the virtual movable object position data.

Here, the virtual moving direction data is obtained by, for example, calculating subsequent change of the moving direction of the movable object 200 in the virtual space with respect to the moving direction of the movable object 200 at the time of movement start, based on the image captured by the camera 108 and measurement data of the angular velocity sensor, the acceleration sensor, or the like of the sensor unit 109.

Further, the virtual movable object position data is obtained by, for example, calculating subsequent change of the position of the movable object 200 in the virtual space with respect to the position of the movable object 200 at the time of movement start, based on the image captured by the camera 108 and measurement data of the angular velocity sensor, the acceleration sensor, or the like of the sensor unit 109.

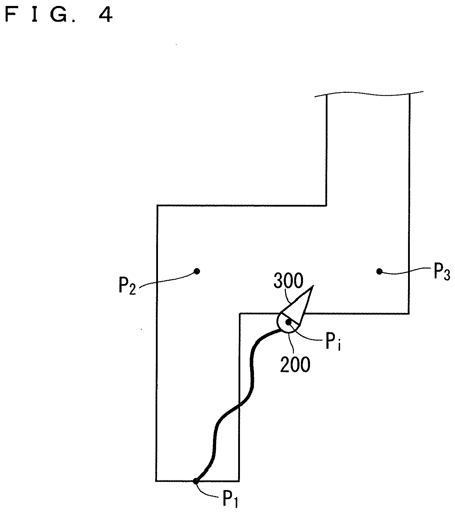

FIG. 4 is a plan view conceptually illustrating a state of movement of the movable object 200 in a virtual space. As illustrated in FIG. 4, a state of movement of the movable object 200 in a virtual space obtained from the virtual moving direction data and the virtual movable object position data is deviated from the original straight moving path of the movable object 200 from the position P₁ to the position P₂. This is due to the following reason: as the movement amount of the movable object 200 from the position P₁ increases, errors accumulate in the virtual moving direction data and the virtual movable object position data that are continuously calculated based on the measurement data from the camera 108 and the sensor unit 109, which deteriorates positioning accuracy of a moving direction 300 and a position P₁ of the movable object 200 in the virtual space.

Next, for example, a plurality of images in front of the movable object 200 are captured by the camera 108 of the movable object 200 that has started movement from the position P₁. Then, the plurality of pieces of obtained image data are transmitted to the positioning apparatus 100 via the communication unit 110 (Step ST02 of FIG. 3). Note that the images captured by the camera 108 in Step ST02 may be the same images as the images that are used to obtain the virtual moving direction data or the virtual movable object position data in Step ST01, or may be different images.

Next, the detector 10 detects whether or not the movable object 200 has moved from the position P₁ to the position P₂ in the real space (Step ST03 of FIG. 3). If it is detected that the movable object 200 has performed the movement in the real space, specifically, if the result corresponds to "YES" branching from Step ST03 illustrated in FIG. 3, the processing proceeds to Step ST04 illustrated in FIG. 3. In contrast, if it is not detected that the movable object 200 has performed the movement in the real space, specifically, if the result corresponds to "NO" branching from Step ST03 illustrated in FIG. 3, the processing returns to Step ST01 illustrated in FIG. 3.

The movement of the movable object 200 in the real space is detected by, for example, analyzing the plurality of pieces of image data transmitted from the camera 108 and thereby identifying each of the positions at which these pieces of image data are captured in the real space. In this case, at each of the position P₁ and the position P₂, a specific tag that allows for easy image detection in an image capturing range captured by the camera 108 or the like may be installed in advance. In this manner, when the detector 10 detects the tag through image analysis, the positions in the real space at which corresponding pieces of image data are captured can be easily identified.

Then, when a tag corresponding to the position P₁ at which the movable object 200 starts movement is detected in certain image data and further a tag corresponding to the position P₂ is detected in image data captured later than that timewise, it is detected that the movable object 200 has moved from the position P₁ to the position P₂.

Note that the fact that the movable object 200 has moved from the position P₁ to the position P₂ in the real space may be detected with another method without the use of images. For example, the communication unit 110 receives radio waves from a beacon that is disposed at a specific location in advance, and the detector 10 identifies the position of the movable object 200 in the real space, based on strength of the received radio waves. In this manner, it may be detected that the movable object 200 has moved from the position P₁ to the position P₂ in the real space. Note that, when the detection method without the use of images as described above is adopted, Step ST02 may be omitted.

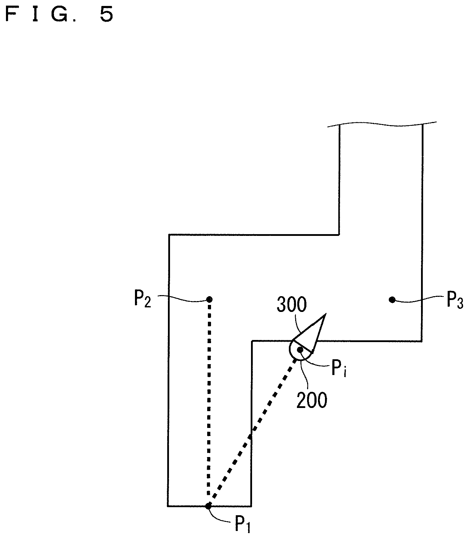

FIG. 5 is a plan view conceptually illustrating a state of movement of the movable object 200 in a virtual space when it is detected that the movable object 200 has moved from the position P₁ to the position P₂ in a real space. As illustrated in FIG. 5, at the time point when the movable object 200 reaches the position P₂ in the real space, it can be understood that the position P₁ of the movable object 200 in the virtual space obtained from the virtual movable object position data is different from the position P₂.

In Step ST04 of FIG. 3, the data acquisition unit 12 at least refers to the position data (X₁, Y₁) and the position data (X₂, Y₂) stored in the storage 22 in advance, specifically, position data corresponding to the start position and the arrival position of the movement of the movable object 200 in the real space. Further, the data acquisition unit 12 acquires the virtual moving direction data of the movable object 200 that has moved to the position P₂. Note that Step ST04 may be performed at the time point of Step ST01.

Next, the correction unit 14 corrects the virtual moving direction data so that the moving direction of the movable object 200 in the virtual space follows the direction connecting the position P₁ and the position P₂ by using the position data (X₁, Y₁) and the position data (X₂, Y₂) (Step ST05 of FIG. 3). Here, "follow the direction connecting the position P₁ and the position P₂" is not limited to a case in which the moving direction of the movable object 200 in the virtual space is completely caused to match the direction connecting the position P₁ and the position P₂, and for example, there may be a difference of some degrees between those directions.

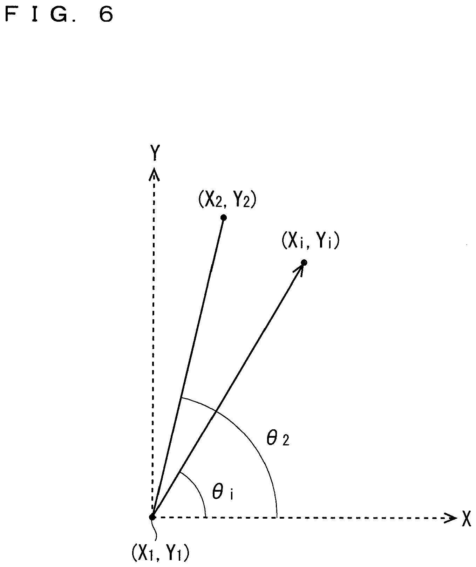

FIG. 6 is a diagram for describing a method of correcting the virtual moving direction data. As illustrated in FIG. 6, when the movable object 200 linearly moves from the position P₁ (position data (X₁, Y₁)) to the position P₁ (position data (X₁, Y₁)) in the XY plane of the virtual space, the angle formed between the moving direction of the movable object 200 in the virtual space corresponding to the virtual moving direction data and the X-axis direction is θᵢ. In contrast, the angle formed between the direction connecting the position P₁ (position data (X₁, Y₁)) and the position P₂ (position data (X₂, Y₂)) common in the real space and the virtual space and the X-axis direction is θ₂.

Thus, by performing correction of changing the angle formed by the X-axis with respect to the virtual moving direction data from θᵢ to θ₂ (specifically, correction of rotating the moving direction of the movable object 200 in the virtual space by an error angle |θ₂ - θᵢ|), correction of causing the moving direction of the movable object 200 in the virtual space to match the moving direction of the movable object 200 in the real space can be performed.

Next, the correction unit 14 corrects the virtual movable object position data as necessary so that the position Pᵢ of the movable object 200 in the virtual space matches the position P₂ (Step ST06 of FIG. 3). In this manner, correction of causing the position Pᵢ of the movable object 200 in the virtual space to match the position of the movable object 200 in the real space can be performed. Note that Step ST06 may be performed prior to Step ST05.

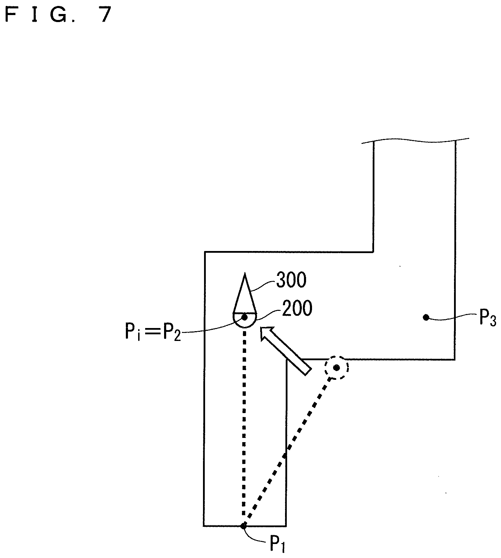

FIG. 7 is a plan view conceptually illustrating a state of movement of the movable object 200 in a virtual space. As illustrated in FIG. 7, the position Pᵢ of the movable object 200 in the virtual space is caused to match the position P₂ in the virtual space through the correction described above.

Regarding subsequent movement of the movable object 200 (specifically, movement from the position P₂ to the position P₃), the positioning apparatus 100 identifies the moving direction 300 and the start position (position P₂) of the movement of the movable object 200 in the virtual space based on the corrected virtual moving direction data (and the virtual movable object position data) and continues to acquire data related to movement of the movable object 200 in the virtual space (Step ST01 of FIG. 3).

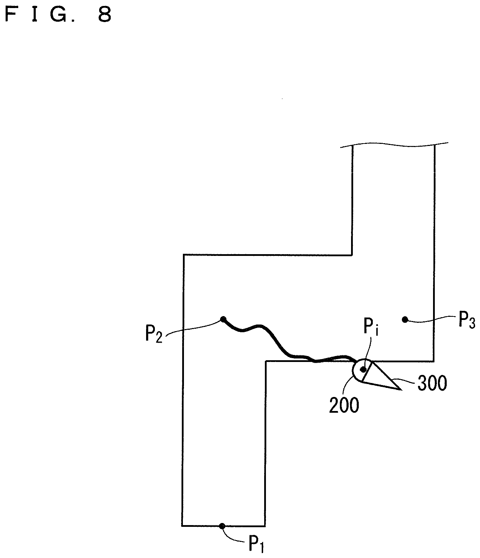

FIG. 8 is a plan view conceptually illustrating a state of movement of the movable object 200 in a virtual space. As illustrated in FIG. 8, the position and the moving direction 300 of the movable object 200 in the virtual space are corrected so as to match the position P₂ as described above, and in addition, the state of the movement of the movable object 200 in the virtual space from the position P₂ to the position P₃ is deviated from the original straight moving path of the movable object 200 from the position P₂ to the position P₃. This is due to the following reason: as the movement amount of the movable object 200 from the position P₂ increases, errors accumulate in the virtual moving direction data and the virtual movable object position data that are continuously calculated based on the measurement data from the camera 108 and the sensor unit 109, which deteriorates positioning accuracy of the moving direction 300 and the position Pᵢ of the movable object 200 in the virtual space.

Then, based on a plurality of pieces of image data captured by the camera 108 of the movable object 200 (Step ST02 of FIG. 3), the detector 10 continues to acquire the image data until it is detected that the movable object 200 has moved from the position P₂ to the position P₃ in the real space (Step ST03 of FIG. 3). Specifically, the acquisition of the image data is continued until it is detected that certain image data is image data corresponding to the position P₂ at which the movable object 200 starts movement and further it is detected that image data captured later than that timewise is image data corresponding to the position P₃.

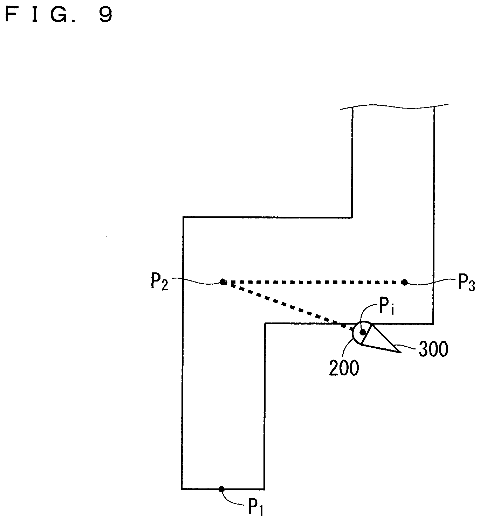

FIG. 9 is a plan view conceptually illustrating a state of movement of the movable object 200 in a virtual space when it is detected that the movable object 200 has moved from the position P₂ to the position P₃ in a real space. As illustrated in FIG. 9, at the time point when the movable object 200 reaches the position P₃ in the real space, it can be understood that the position Pᵢ of the movable object 200 in the virtual space obtained from the virtual movable object position data is different from the position P₃.

When it is detected that the movable object 200 has moved from the position P₂ to the position P₃ in the real space in the detector 10, the data acquisition unit 12 at least refers to the position data (X₂, Y₂) and the position data (X₃, Y₃) stored in the storage 22 in advance, specifically, position data corresponding to the start position and the arrival position of the movement (Step ST04 of FIG. 3). Note that Step ST04 may be performed at the time point of Step ST01.

Then, the correction unit 14 corrects the virtual moving direction data so that the moving direction of the movable object 200 in the virtual space follows the direction connecting the position P₂ and the position P₃ by using the position data (X₂, Y₂) and the position data (X₃, Y₃) (Step ST05 of FIG. 3).

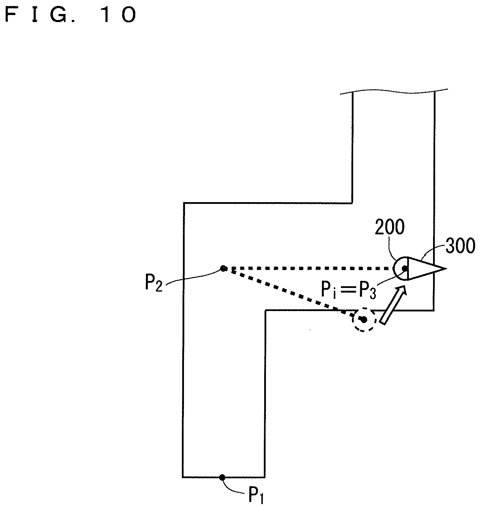

FIG. 10 is a plan view conceptually illustrating a state of movement of the movable object 200 in a virtual space. As illustrated in FIG. 10, the position Pᵢ of the movable object 200 in the virtual space is caused to match the position P₃ in the virtual space through the correction described above.

Also when the position data of the specific position of the movable object 200 in the moving path stored in the storage 22 is further increased, the moving direction 300 and the start position of the movement of the movable object 200 in the virtual space can be identified based on the virtual moving direction data (and the virtual movable object position data) corrected at immediately preceding specific positions, and can be corrected in a similar manner.

### <Effects Produced by Above-Described Embodiment>

Next, an example of effects produced by the above-described embodiment will be described. Note that the following will describe the effects based on a specific configuration illustrated in the above-described embodiment. Such a specific configuration, however, may be replaced with another specific configuration illustrated in the specification of the present application in so far as similar effects are produced.

According to the above-described embodiment, the positioning apparatus includes a detector 10, a data acquisition unit 12, and a correction unit 14. The detector 10 detects that the movable object 200 has moved from a first position to a second position. Here, the first position corresponds to the start position of movement of the movable object 200, and corresponds to, for example, the position P₁ (or the position P₂). Further, the second position corresponds to the arrival position of movement of the movable object 200, and corresponds to, for example, the position P₂ (or the position P₃). The data acquisition unit 12 acquires at least first position data, second position data, and virtual moving direction data. Here, the first position data corresponds to, for example, the position data (X₁, Y₁) indicating the position P₁. Further, the second position data corresponds to, for example, the position data (X₂, Y₂) indicating the position P₂. Further, the virtual moving direction data is data indicating a moving direction of the movable object 200 that has moved from the first position to the second position in a virtual space. The correction unit 14 corrects the virtual moving direction data so that the moving direction of the movable object 200 in the virtual space follows a first direction by using the first position data and the second position data. Here, the first direction is a direction connecting the first position and the second position.

According to the configuration as described above, the moving direction of the movable object 200 in a real space can be positioned with high accuracy, with the moving direction of the movable object 200 in the virtual space being caused to be reflected in information corresponding to the movable object 200 in the real space. In particular, because errors caused in positioning data when the movable object 200 rotates in the virtual space are large, positioning accuracy of the movable object 200 in the virtual space can be effectively enhanced by correcting the moving direction of the movable object 200 in the virtual space with the above-described configuration.

Further, the moving direction of the movable object 200 in the virtual space can be corrected in real time at the time point when the movable object 200 in the real space reaches the next specific position. Therefore, a ratio of time with high positioning accuracy can be maintained high.

Note that similar effects can be produced even when another configuration illustrated in the specification of the present application is added to the above-described configuration as appropriate, specifically, even when another configuration in the specification of the present application not referred to as the above-described configuration is added as appropriate.

Further, according to the above-described embodiment, the correction unit 14 calculates an error angle being an angle formed between the first direction and a second direction by using the first position data, the second position data, and virtual movable object position data. Further, the correction unit 14 corrects the virtual moving direction data, based on the error angle. Here, the virtual movable object position data refers to data indicating a position of the movable object 200 that has moved from the first position to the second position in the virtual space. Further, the second direction refers to a direction connecting the first position and the position of the movable object 200 in the virtual space. According to the configuration as described above, by correcting the moving direction of the movable object 200 in the virtual space based on the error angle, positioning accuracy of the movable object 200 in the virtual space can be enhanced.

Further, according to the above-described embodiment, the correction unit 14 corrects the virtual movable object position data so that the virtual movable object position data matches the second position data. According to the configuration as described above, by causing the position of the movable object 200 in the virtual space to match the position of the movable object 200 in the real space, the position of the movable object 200 in the real space can be positioned with high accuracy.

Further, according to the above-described embodiment, the first position and the second position are positions different from each other identified in advance on a path (moving path) in which the movable object moves. According to the configuration as described above, while the movable object 200 moves on the predetermined moving path, the detector 10 can securely detect the first position and the second position captured by the camera 108. Therefore, the correction unit 14 can securely correct the moving direction of the movable object 200 in the virtual space or the like.

Further, according to the above-described embodiment, the second position is a corner in a path (moving path) in which the movable object 200 moves. According to the configuration as described above, the correction unit 14 can immediately correct relatively large errors caused in positioning data when the movable object 200 rotates at the position where the movable object 200 rotates. Thus, positioning accuracy of the movable object 200 in the virtual space can be effectively enhanced and a state with high positioning accuracy can be maintained.

Further, according to the above-described embodiment, a camera 108 is attached to the movable object 200. Further, the detector 10 detects that the movable object 200 has reached the second position, based on an image captured by the camera 108. According to the configuration as described above, the detector 10 can detect that the movable object 200 in the real space has moved from the first position to the second position, based on the image including the second position in the real space captured by the camera 108.

According to the above-described embodiment, when being installed and executed by a computer, the positioning program causes the computer to detect that the movable object 200 has moved from the first position to the second position. Further, the positioning program causes the computer to acquire at least first position data being data indicating the first position, second position data being data indicating the second position, and virtual moving direction data being data indicating the moving direction of the movable object 200 that has moved from the first position to the second position in the virtual space. Further, the positioning program causes the computer to correct the virtual moving direction data so that the moving direction of the movable object 200 in the virtual space follows the first direction being a direction connecting the first position and the second position by using the first position data and the second position data. Here, the computer corresponds to, for example, the CPU 102.

According to the configuration as described above, the moving direction of the movable object 200 in a real space can be positioned with high accuracy, with the moving direction of the movable object 200 in the virtual space being caused to be reflected in information corresponding to the movable object 200 in the real space.

Note that similar effects can be produced even when at least one of other configurations illustrated in the specification of the present application is added to the above-described configuration as appropriate, specifically, even when another configuration illustrated in the specification of the present application not referred to as the above-described configuration is added as appropriate.

Further, the above-described program may be stored in a computer-readable portable recording medium, such as a magnetic disk, a flexible disk, an optical disc, a compact disc, a Blu-ray (registered trademark) disc, and a DVD. Further, the portable recording medium storing the program for implementing the above-described function may be commercially distributed.

According to the above-described embodiment, the positioning method includes: detecting that the movable object 200 has moved from the first position to the second position; acquiring at least the first position data being data indicating the first position, the second position data being data indicating the second position, and the virtual moving direction data being data indicating the moving direction of the movable object 200 that has moved from the first position to the second position in the virtual space; and correcting the virtual moving direction data so that the moving direction of the movable object 200 in the virtual space follows the first direction being a direction connecting the first position and the second position by using the first position data and the second position data.

According to the configuration as described above, the moving direction of the movable object 200 in a real space can be positioned with high accuracy, with the moving direction of the movable object 200 in the virtual space being caused to be reflected in information corresponding to the movable object 200 in the real space.

Note that, unless otherwise specifically noted, the order in which each processing is performed may be changed.

### <Modifications of Above-Described Embodiment>

In the above-described embodiment, the position P₂ and the position P₃ are configured in each corner in the moving path of the movable object 200. However, these specific positions may be configured at other positions (in the middle of the straight path or the like) in the moving path of the movable object 200, or these specific positions may include both of a position at a corner in the moving path of the movable object 200 and a position in the middle of the straight path.

In the above-described embodiment, the dimension, the shape, the relative disposition relationship, the condition for implementation, and the like of each component may be described. However, all of these are merely an example in all the aspects, and are not limited to those described in the specification of the present application.

Thus, numerous unillustrated modifications and equivalents are assumable within the scope of the technology disclosed in the specification of the present application. For example, a case in which at least one component is modified, added, or omitted is included.

Further, in so far as the description remains consistent, a component that is described as being a "single" component in the above-described embodiment may be "multiple" components.

In addition, each component in the above-described embodiment is a conceptual unit. The scope of the technology disclosed in the specification of the present application includes a case in which one component consists of a plurality of structures, a case in which one component corresponds to a part of a certain structure, and also a case in which a plurality of components are provided in one structure.

Further, each component in the above-described embodiment includes a structure having another structure or shape, in so far as the component exerts the same function.

Further, each component described in the above-described embodiment is assumed as software or firmware, or as hardware corresponding thereto. In both of the concepts, each component is referred to as a "unit", a "processing circuit" (circuitry), or the like.

Note that, in the present invention, any component in the present embodiment can be modified or omitted within the scope of the invention.

While the invention has been shown and described in detail, the foregoing description is in all aspects illustrative and not restrictive. It is therefore understood that numerous modifications and variations can be devised without departing from the scope of the invention.

## Claims

1. A positioning apparatus comprising:
a detector (10) configured to detect that a movable object (200) has moved from a first position to a second position;
a data acquisition unit (12) configured to acquire at least first position data being data indicating the first position, second position data being data indicating the second position, and virtual moving direction data being data indicating a moving direction of the movable object (200) having moved from the first position to the second position in a virtual space; and
a correction unit (14) configured to correct the virtual moving direction data so that the moving direction of the movable object (200) in the virtual space follows a first direction being a direction connecting the first position and the second position by using the first position data and the second position data.

2. The positioning apparatus according to claim 1, wherein
the correction unit (14) calculates an error angle being an angle formed between the first direction and a second direction being a direction connecting the first position and a position of the movable object (200) in the virtual space by using the first position data, the second position data, and virtual movable object (200) position data being data indicating the position of the movable object (200) having moved from the first position to the second position in the virtual space, and corrects the virtual moving direction data based on the error angle.

3. The positioning apparatus according to claim 2, wherein
the correction unit (14) corrects the virtual movable object (200) position data so that the virtual movable object (200) position data matches the second position data.

4. The positioning apparatus according to any one of claims 1 to 3, wherein
the first position and the second position detected by the detector (10) are positions different from each other identified in advance on a path in which the movable object (200) moves.

5. The positioning apparatus according to any one of claims 1 to 4, wherein
the second position detected by the detector (10) is a corner in a path in which the movable object (200) moves.

6. The positioning apparatus according to any one of claims 1 to 5, wherein
a camera (108) is attached to the movable object (200), and
the detector (10) detects that the movable object (200) has reached the second position, based on an image captured by the camera (108).

7. A recording medium storing a positioning program, the positioning program, when being installed and executed by a computer (102), being configured to implement:
causing the computer (102) to detect that a movable object (200) has moved from a first position to a second position;
causing the computer (102) to acquire at least first position data being data indicating the first position, second position data being data indicating the second position, and virtual moving direction data being data indicating a moving direction of the movable object (200) having moved from the first position to the second position in a virtual space; and
causing the computer (102) to correct the virtual moving direction data so that the moving direction of the movable object (200) in the virtual space follows a first direction being a direction connecting the first position and the second position by using the first position data and the second position data.

8. A positioning method comprising:
detecting that a movable object (200) has moved from a first position to a second position;
acquiring at least first position data being data indicating the first position, second position data being data indicating the second position, and virtual moving direction data being data indicating a moving direction of the movable object (200) having moved from the first position to the second position in a virtual space; and
correcting the virtual moving direction data so that the moving direction of the movable object (200) in the virtual space follows a first direction being a direction connecting the first position and the second position by using the first position data and the second position data.
